# EUROPEAN PATENT SPECIFICATION

(11) **EP 3 889 072 B1**
(45) Date of publication and mention of the grant of the patent: **07.08.2024**
(21) Application number: 20887330.7
(22) Date of filing: 30.10.2020
(51) Int. Cl.: B65D 85/672, B65D 81/02, H01M 4/66

(54) **APPARATUS FOR ACCOMMODATING COPPER FOIL**
VORRICHTUNG ZUR AUFBEWAHRUNG VON KUPFERFOLIE
DISPOSITIF POUR ACCUEILLIR UNE FEUILLE DE CUIVRE

(30) Priority: 13.11.2019 KR 20190004544 U; 03.07.2020 KR 20200002386 U
(43) Date of publication of application: 06.10.2021
(73) Proprietor: SK Nexilis Co., Ltd., Jeollabuk-do 56137 (KR)
(72) Inventor: KIM, Young Tae, Jeongeup-si Jeollabuk-do 56137 (KR); JUNG, In Soo, Jeongeup-si Jeollabuk-do 56137 (KR); KIM, Seung Min, Jeongeup-si Jeollabuk-do 56137 (KR); YANG, Young Gyu, Jeongeup-si Jeollabuk-do 56137 (KR)
(74) Representative: Ter Meer Steinmeister & Partner
(86) International application number: PCT/KR2020/015038
(87) International publication number: WO 2021/096121

(56) References cited:
- EP-A1- 2 644 534
- WO-A1-2005/030611
- WO-A1-2005/030611
- WO-A1-2019/088078
- CN-A- 106 428 988
- CN-U- 204 384 095
- DE-A1- 102015 001 177
- JP-A- 2006 001 637
- JP-A- 2013 227 071

## Description

### [Technical Field]

The present invention relates to an apparatus for accommodating copper foil used for manufacturing a negative electrode for a secondary battery, a flexible printed circuit board, and the like.

### [Background Art]

Copper foil is used for manufacturing a variety of products such as a negative electrode for a secondary battery, a flexible printed circuit board (FPCB), and the like. Such copper foil is manufactured using an electroplating method in which an electrolyte is supplied between a positive electrode and a negative electrode and then a current flows therethrough. While copper foil is manufactured using the electroplating method, an electrolytic copper foil manufacturing apparatus is used.

Copper foil manufactured by the electrolytic copper foil manufacturing apparatus is transported to a customer while being wound on a core. For example, the copper foil wound on the core may be transported while being loaded on a transportation means such as a vehicle, a vessel, a railway vehicle, an aircraft, and the like.

In the above transportation process, an apparatus for accommodating copper foil serves to accommodate the copper foil wound on the core. An apparatus for accommodating copper foil according to the related art accommodates copper foil wound on a core by supporting the core protruding from both sides of the copper foil.

Accordingly, vibrations, shaking, and the like, which occur while a transportation means moves, are transferred to the core through the apparatus for accommodating copper foil and transferred to the copper foil through the core. Since the vibrations, shaking, and the like transferred to the copper foil cause a shock to the copper foil, a defect in the copper foil is caused during a transportation process.

An accommodating apparatus is also used for transporting glass films wound on winding shafts. One such accommodating apparatus is known from DE 10 2015 001 177 A1. It includes a transport unit with a mounting support for the winding core which has a transport unit interior part and a transport unit exterior part. The transport unit interior part includes a floor element and side elements. The transport unit exterior part includes a floor element, side elements and a cover element. The mounting support for the winding core is always connected with or formed by two side elements of the transport unit interior part which are located opposite each other. Furthermore, the transport unit interior part is spaced apart from the transport unit exterior part in a floor region by spring elements, which purportedly allows that the transport unit interior part is arranged vibration-decoupled from the transport unit exterior part.

WO 2005/030611 A1 discloses an end wall for packaging a wound object in such a way that it can be easily transported with a cargo-handling vehicle such as a forklift. The end wall is arranged at both end sections of the wound object. It is formed of plastic and has a body section and leg sections extending downward from the lower end of the body section. The body section has, at its central section, supporting means for supporting an end section of the wound object's core. To a lower end of both sides of the body section are attached end sections of two lower beams that connect together a pair of end walls. The leg sections have a height capable of forming a space under the two lower beams, the space being the space into which liftable loading means of a cargo-handling vehicle is inserted.

WO 2019/088078 A1 describes a roll packaging body provided with a winding core, a resin film, and a packaging film. The axial dimension of the winding core is greater than the width dimension of the resin film. In the region excluding the outer peripheral surface at the end of the winding core, the resin film is wound into roll form on the outer peripheral surface of the winding core, and the packaging film is wound on the outer peripheral surface of the roll body of the resin film.

EP 2 644 534 A1 discloses a roll body container for transporting a roll body, comprising a pallet being located below the roll body to be mounted thereto, and configuring a base body, a pair of shaft members being fitted detachably to each of both ends of a winding core, a pair of support members being positioned on both sides of the mounting position of the roll body and supporting the pair of shaft members, and a pair of bases holding detachably the pair of support members.

### [Disclosure]

### [Technical Problem]

Therefore, the present invention is designed to solve the problems and is for providing an apparatus for accommodating copper foil, which is capable of reducing a defect rate of the copper foil occurring due to vibrations, shaking, and the like which occur during a transportation process.

### [Technical Solution]

To solve the above problems, the present invention provides an apparatus for accommodating a copper foil with the features of independent claim 1. Preferred embodiments of the apparatus are covered by the dependent claims.

Amongst others, the apparatus for accommodating copper foil according to the present invention includes an accommodation body in which an accommodation space for accommodating copper foil wound on a core is provided, a first support portion coupled to the accommodation body to support one side of the core, a second support portion coupled to the accommodation body to support the other side of the core, a first damper portion coupled to the first support portion to be disposed between the first support portion and the one side of the core, and a second damper portion coupled to the second support portion to be disposed between the second support portion and the other side of the core. Here, the first damper portion includes a first damper body coupled to the first support portion and a plurality of first damper protrusions protruding from the first damper body.

### [Advantageous Effects]

According to the present invention, the apparatus for accommodating copper foil may have the following effects.

The present invention is implemented to absorb vibrations, shaking, and the like being transferred through an accommodation body and a first support portion using a first damper portion. Accordingly, since the present invention can reduce the level of vibrations, shaking, and the like which occur during a transportation process and are transferred to a core, it is possible to reduce a defect rate of copper foil which occurs due to the vibrations, shaking, and the like. Therefore, according to the present invention, not only the quality of copper foil which has been transported can be improved but also stability and ease of transport work for the copper foil can be improved.

### [Description of Drawings]

FIG. 1 is a schematic explosive perspective view of an apparatus for accommodating copper foil according to the present invention.
FIG. 2 is a schematic side cross-sectional view of the apparatus for accommodating copper foil according to the present invention which is taken along line I-I of FIG. 1.
FIG. 3 is a schematic perspective view of a first support portion and a first damper portion in the apparatus for accommodating copper foil according to the present invention.
FIGS. 4 and 5 are schematic perspective views illustrating examples of the first support portion in the apparatus for accommodating copper foil according to the present invention.
FIG. 6 is a schematic exploded cross-sectional view of the first support portion and an accommodation body which are taken along line II-II of FIG. 2 in the apparatus for accommodating copper foil according to the present invention.
FIG. 7 is a schematic perspective view of a second support portion and a second damper portion in the apparatus for accommodating copper foil according to the present invention.
FIGS. 8 and 9 are schematic perspective views illustrating examples of the second support portion in the apparatus for accommodating copper foil according to the present invention.
FIG. 10 is a schematic exploded cross-sectional view of the second support portion and the accommodation body which are taken along line III-III of FIG. 2 in the apparatus for accommodating copper foil according to the present invention.
FIG. 11 is a schematic perspective view of the first damper portion in the apparatus for accommodating copper foil according to the present invention.
FIG. 12 is a schematic front view illustrating a modified example of the first damper portion when viewed in a direction of arrow A of FIG. 11 in the apparatus for accommodating copper foil according to the present invention.
FIG. 13 is a conceptual side view of the first damper portion coupled to the first support portion when viewed in a direction of arrow B of FIG. 11 in the apparatus for accommodating copper foil according to the present invention.
FIGS. 14 to 16 are schematic front views of the first damper portion coupled to the first support portion in the apparatus for accommodating copper foil according to the present invention.
FIGS. 17 to 20 are schematic plan views of the first damper portion coupled to the first support portion in the apparatus for accommodating copper foil according to the present invention.
FIGS. 21 and 22 are schematic front views of a first support damper coupled to the first support portion in the apparatus for accommodating copper foil according to the present invention.
FIGS. 23 and 24 are schematic front views of a second support damper coupled to the second support portion in the apparatus for accommodating copper foil according to the present invention.
FIG. 25 is a schematic perspective view of a first sidewall portion including a first sidewall groove and a first sidewall surface in the apparatus for accommodating copper foil according to the present invention.
FIG. 26 is a schematic front view of a first sidewall damper coupled to a first sidewall member in the apparatus for accommodating copper foil according to the present invention.
FIG. 27 is a schematic perspective view of a second sidewall portion including a second sidewall groove and a second sidewall surface in the apparatus for accommodating copper foil according to the present invention.
FIG. 28 is a schematic front view of a second sidewall damper coupled to a second sidewall member in the apparatus for accommodating copper foil according to the present invention.

### [Best Mode]

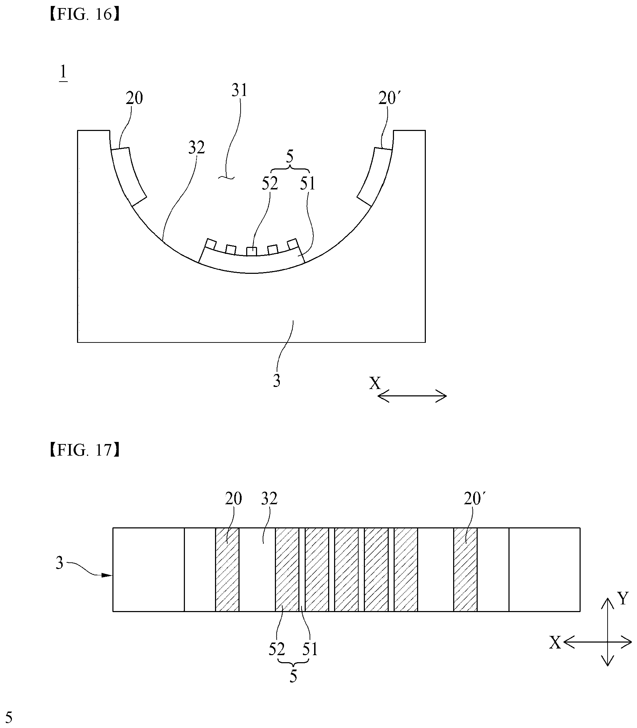

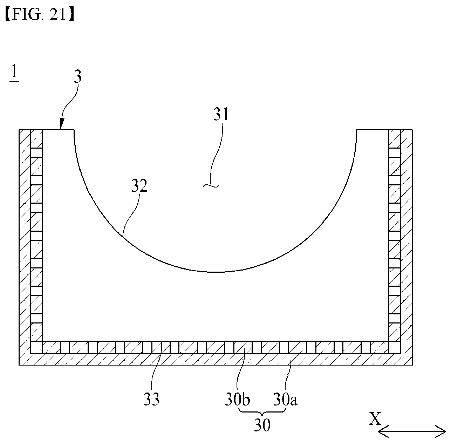

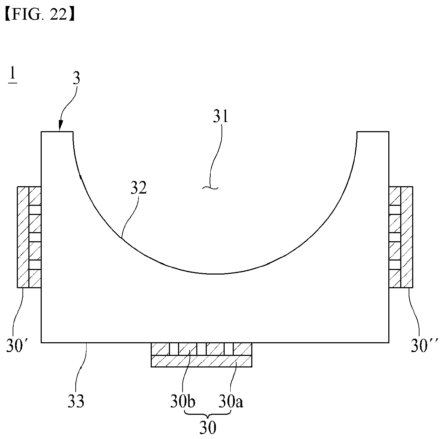

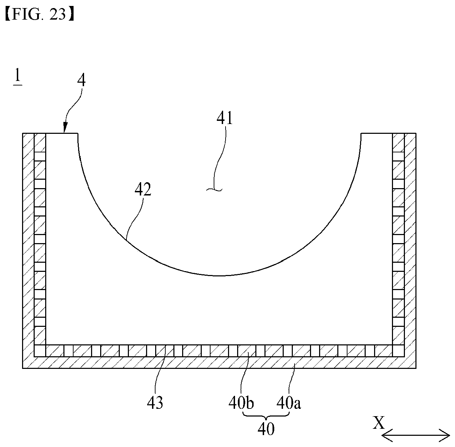

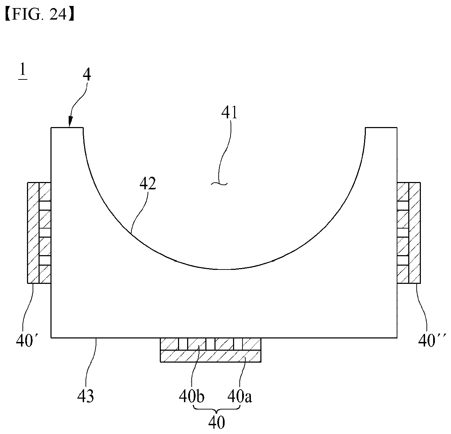

Hereinafter, embodiments of an apparatus for accommodating copper foil according to the present invention will be described in detail with reference to the attached drawings. In FIGS. 17 to 20, hatched parts shown refer to surfaces disposed to face a core. In FIGS. 21 and 22, a first support damper is hatched to be distinguished from other components. In FIGS. 23 and 24, a second support damper is hatched to be distinguished from other components.

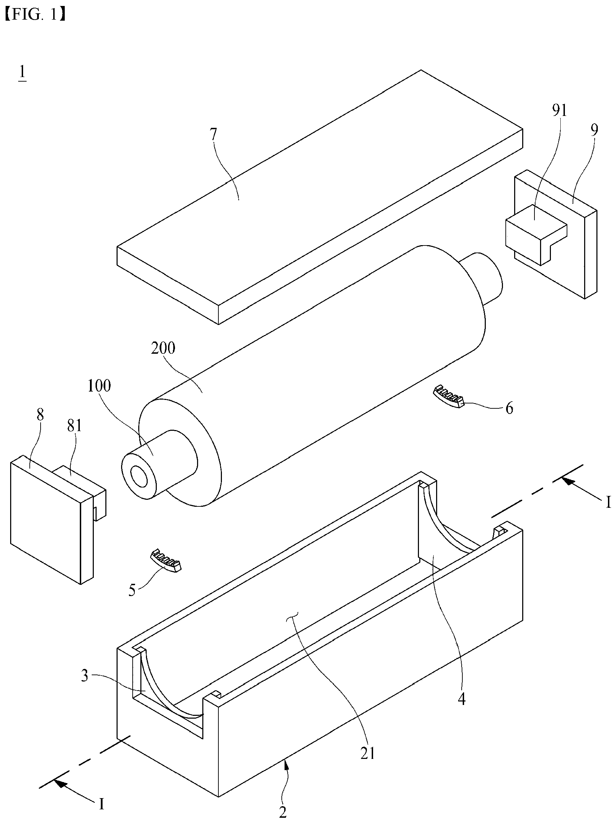

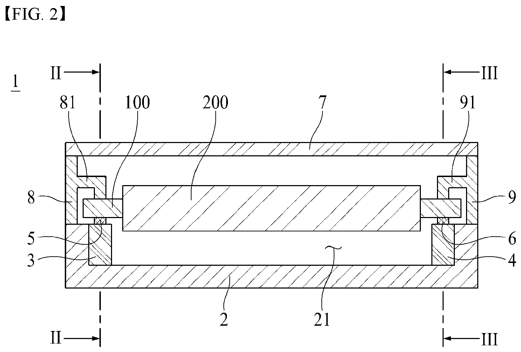

Referring to FIGS. 1 and 2, an apparatus 1 for accommodating copper foil (hereinafter, referred to as the copper foil accommodation apparatus 1) according to the present invention accommodates copper foil 200 wound on a core 100. The copper foil 200 is used for manufacturing a negative electrode for a secondary battery, a flexible printed circuit board (FPCB), and the like.

The copper foil accommodation apparatus 1 according to the present invention includes an accommodation body 2, a first support portion 3, a second support portion 4, a first damper portion 5, and a second damper portion 6.

Referring to FIGS. 1 and 2, the accommodation body 2 includes an accommodation space 21 configured to accommodate the copper foil 200 wound on the core 100. The accommodation body 2 may be formed to have an open top. The open top may be connected to the accommodation space 21. Accordingly, the copper foil 200 wound on the core 100 is inserted into the accommodation space 21 through the open top of the accommodation body 2 so as to be accommodated in the accommodation body 2. When the copper foil 200 wound on the core 100 is accommodated in the accommodation body 2, a cover portion 7 may be coupled to the accommodation body 2. The cover portion 7 may block the open top of the accommodation body 2.

The accommodation body 2 may be formed to have a rectangular parallelepiped shape with an open top as a whole but is not limited thereto, and the accommodation body 2 may be formed in other shapes as long as the copper foil 200 wound around the core 100 can be accommodated therein.

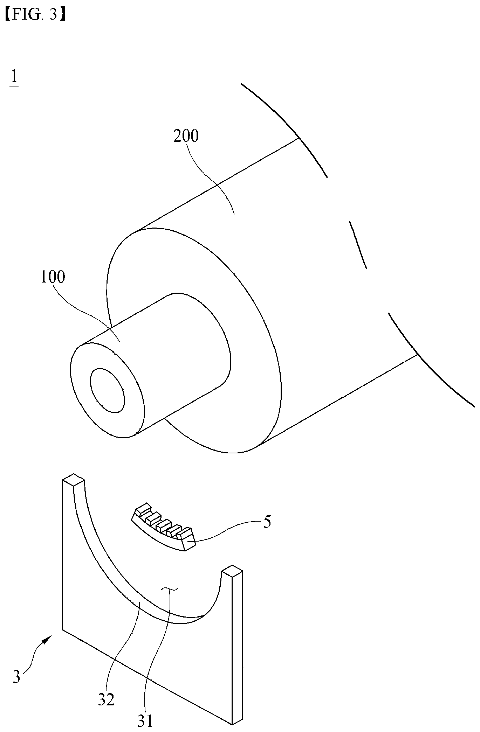

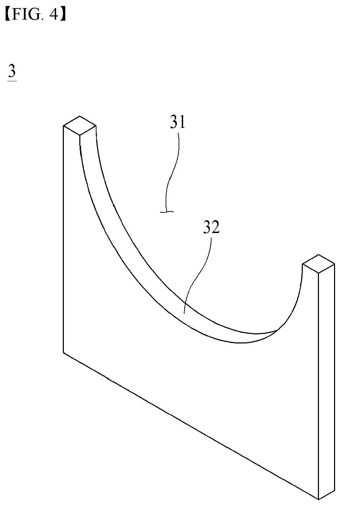

Referring to FIGS. 1 to 4, the first support portion 3 is coupled to the accommodation body 2 to support one side of the core 100. The first support portion 3 may be detachably coupled to the accommodation body 2. When the first support portion 3 is coupled to the accommodation body 2, the first support portion 3 may be disposed in the accommodation space 21.

The first support portion 3 may include a first support groove 31 into which the core 100 is inserted. The first support portion 3 may be formed to have an open upper side due to the first support groove 31. Accordingly, the core 100 may be inserted into the first support groove 31 through the open upper side of the first support portion 3. The first support groove 31 may be formed to have a semicircular shape as a whole but is not limited thereto, and the first support groove 31 may be formed in other shapes as long as the core 100 can be inserted thereinto.

The first support portion 3 may include a first support surface 32. The first support surface 32 may support the core 100 inserted into the first support groove 31. The first support surface 32 may be a surface of the first support portion 3 which faces the first support groove 31. The first support surface 32 may be formed to be a curved surface.

Referring to FIGS. 1 to 6, the first support portion 3 may include a first insertion member 3a and a first reduction groove 3b.

The first insertion member 3a is configured to be inserted into the accommodation body 2. The first insertion member 3a and the first support surface 32 may be disposed opposite to each other in the first support portion 3. When the first support surface 32 is disposed at an upper portion of the first support portion 3, the first insertion member 3a may be disposed at a lower portion of the first support portion 3.

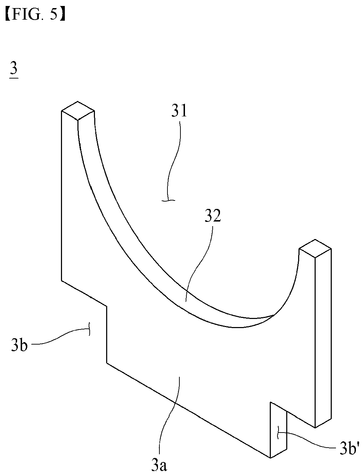

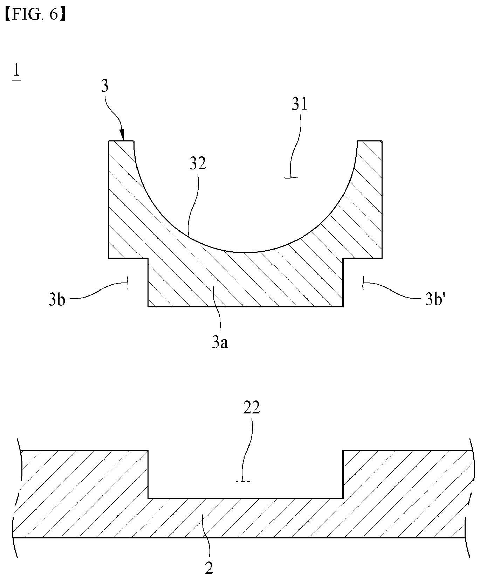

The first reduction groove 3b is formed in the first insertion member 3a. As the first reduction groove 3b is formed, a size of the first insertion member 3a may be reduced. A plurality of such first reduction grooves 3b may be formed in the first insertion member 3a. The first reduction grooves 3b and 3b' may be disposed at positions spaced apart from each other. As shown in FIGS. 5 and 6, the first insertion member 3a may be formed to be disposed between the first reduction grooves 3b and 3b'.

When the first support portion 3 includes the first insertion member 3a and the first reduction groove 3b, the accommodation body 2 may include a first insertion groove 22 (refer to FIG. 6). When the first support portion 3 is coupled to the accommodation body 2, the remaining part of the first insertion member 3a excluding the first reduction groove 3b may be inserted into the first insertion groove 22. Accordingly, the first support portion 3 may be firmly coupled to the accommodation body 2 using an insertion structure between the first insertion member 3a and the first insertion groove 22. Accordingly, the first support portion 3 may be firmly maintained while supporting the one side of the core 100. The first insertion groove 22 may be formed in a bottom surface in the accommodation body 2.

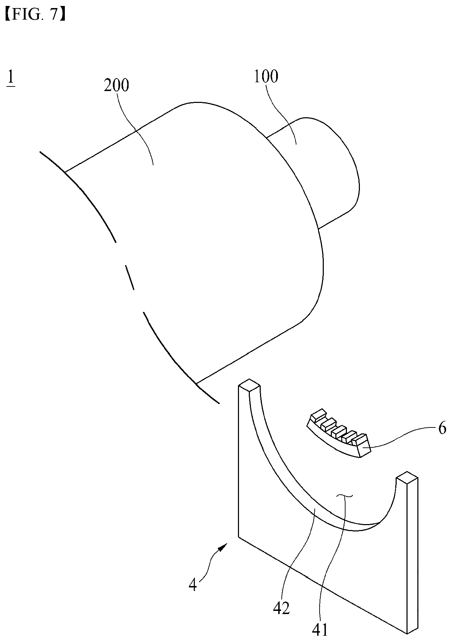

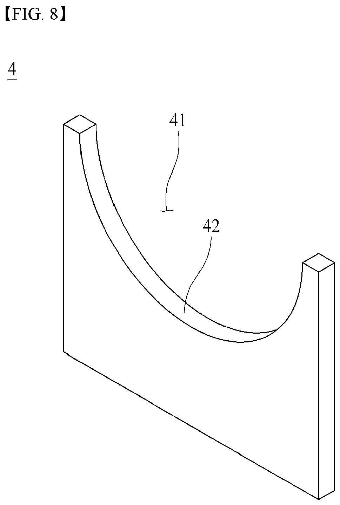

Referring to FIGS. 1, 2, 7, and 8, the second support portion 4 is coupled to the accommodation body 2 to support the other side of the core 100. The second support portion 4 may be detachably coupled to the accommodation body 2. When the second support portion 4 is coupled to the accommodation body 2, the second support portion 4 may be disposed in the accommodation space 21.

The second support portion 4 may include a second support groove 41 into which the core 100 is inserted. The second support portion 4 may be formed to have an open upper side due to the second support groove 41. Accordingly, the core 100 may be inserted into the second support groove 41 through the open upper side of the second support portion 4. The second support groove 41 may be formed to have a semicircular shape as a whole but is not limited thereto, and the second support groove 41 may be formed in other shapes as long as the core 100 can be inserted thereinto.

The second support portion 4 may include a second support surface 42. The second support surface 42 may support the core 100 inserted into the second support groove 41. The second support surface 42 may be a surface of the second support portion 4 which faces the second support groove 41. The second support surface 42 may be formed to be a curved surface.

Referring to FIGS. 1, 2, and 7 to 10, the second support portion 4 may include a second insertion member 4a and a second reduction groove 4b.

The second insertion member 4a is configured to be inserted into the accommodation body 2. The second insertion member 4a and the second support surface 42 may be disposed opposite to each other in the second support portion 4. When the second support surface 42 is disposed at an upper portion of the second support portion 4, the second insertion member 4a may be disposed at a lower portion of the second support portion 4.

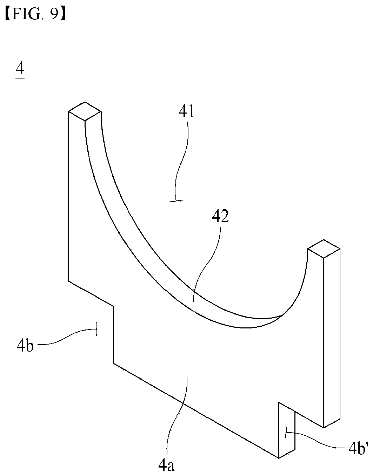

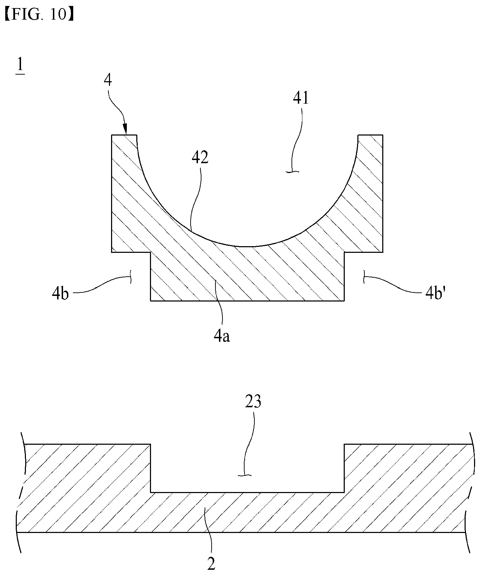

The second reduction groove 4b is formed in the second insertion member 4a. As the second reduction groove 4b is formed, a size of the second insertion member 4a may be reduced. A plurality of such second reduction grooves 4b may be formed in the second insertion member 4a. The second reduction grooves 4b and 4b' may be disposed at positions spaced apart from each other. As shown in FIGS. 9 and 10, the second insertion member 4a may be formed to be disposed between the second reduction grooves 4b and 4b'.

When the second support portion 4 includes the second insertion member 4a and the second reduction groove 4b, the accommodation body 2 may include a second insertion groove 23 (refer to FIG. 10). When the second support portion 4 is coupled to the accommodation body 2, the remaining part of the second insertion member 4a excluding the second reduction groove 4b may be inserted into the second insertion groove 23. Accordingly, the second support portion 4 may be firmly coupled to the accommodation body 2 using an insertion structure between the second insertion member 4a and the second insertion groove 23. Accordingly, the second support portion 4 may be firmly maintained while supporting the other side of the core 100. The second insertion groove 23 may be formed in the bottom surface in the accommodation body 2.

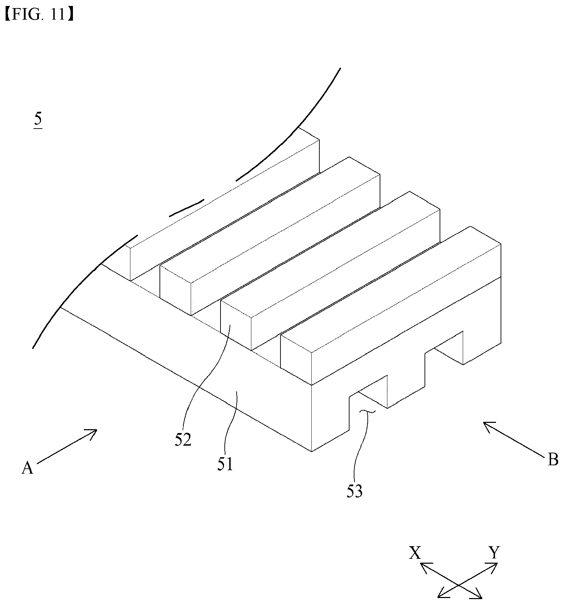

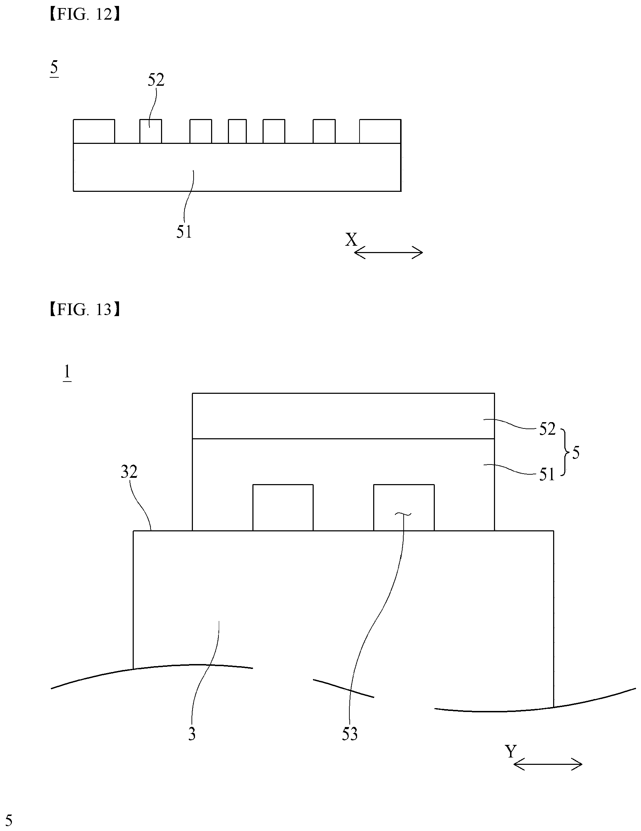

Referring to FIGS. 1 to 13, the first damper portion 5 may be disposed between the first support portion 3 and the one side of the core 100. The first damper portion 5 is coupled to the first support portion 3. The first damper portion 5 may be coupled to the first support portion 3 using an adhesive force. The first damper portion 5 may be coupled to the first support surface 32. The first damper portion 5 is formed to have a linear shape as shown in FIG. 12, and may be bent and deformed to be a curved shape according to a curvature of the first support surface 32 as being coupled to the first support surface 32. The first damper portion 5 may be formed of an elastically deformable material. For example, the first damper portion 5 may be formed of rubber, urethane, or the like.

When the copper foil 200 wound on the core 100 is accommodated in the accommodation space 21, the first damper portion 5 may come into contact with the one side of the core 100 between the first support surface 32 and the one side of the core 100. Accordingly, when vibrations, shaking, and the like occur during a transportation process using a transportation means such as a vehicle, a vessel, a railway vehicle, an aircraft, and the like, the first damper portion 5 may absorb vibrations, shaking, and the like transferred through the accommodation body 2 and the first support portion 3. Accordingly, the first damper portion 5 may reduce the level of vibrations, shaking, or the like being transferred to the one side of the core 100. Accordingly, the copper foil accommodation apparatus 1 according to the present invention may reduce a defect rate of the copper foil 200 occurring due to vibrations, shaking, and the like which occur during the transportation process. Accordingly, the copper foil accommodation apparatus 1 according to the present invention may improve the quality of the copper foil 200 which has been transported as well as improve stability and ease of transport work for the copper foil 200.

The first damper portion 5 includes a first damper body 51 and a plurality of first damper protrusions 52.

The first damper body 51 is coupled to the first support portion 3. The first damper body 51 is coupled to the first support surface 32. The first damper body 51 may be coupled to the first support surface 32 using an adhesive force. The first damper body 51 may be coupled to the first support surface 32 using an additional first fixing member (not shown). The first fixing member may be inserted into the first damper body 51 and the first support portion 3 between the first damper protrusions 52 so as to fix the first damper portion 5 to the first support portion 3. For example, the first fixing member may be implemented as a staple or the like which is fixedly insertable into the first damper body 51 and the first support portion 3.

The first damper protrusions 52 protrude from the first damper body 51. The first damper protrusions 52 may protrude upward from a top surface of the first damper body 51. The first damper protrusions 52 are disposed to be spaced apart from each other. Accordingly, the first damper protrusions 52 may come into contact with mutually different parts of the one side of the core 100. A contact area of the first damper portion 5 which comes into contact with the one side of the core 100 may be reduced using the first damper protrusions 52. Also, elastic deformation for each of the first damper protrusions 52 may be further smoothly performed. Accordingly, the first damper portion 5 may be implemented to further reduce the level of vibrations, shaking, or the like being transferred to the one side of the core 100. The first damper protrusions 52 may be formed to have a rectangular parallelepiped shape as a whole but is not limited thereto, and may be formed in other shapes capable of reducing the level of vibrations, shaking, and the like being transferred to the one side of the core 100. For example, the first damper protrusions 52 may be formed to have a size which is reduced when gradually protruding upward from the first damper body 51. In this case, parts of the first damper protrusions 52 which come into contact with the one side of the core 100 may be formed to have curved surfaces.

The first damper protrusions 52 are disposed to be spaced apart from each other in a first axial direction (X-axis direction). The first damper protrusions 52 may be formed to have a greater length in a second axial direction (Y-axis direction) in comparison to a length in the first axial direction (X-axis direction). The second axial direction (Y-axis direction) and the first axial direction (X-axis direction) are perpendicular to each other in one plane. When the first damper portion 5 is coupled to the first support portion 3, the copper foil 200 may be accommodated in the accommodation body 2 to be parallel to the second axial direction (Y-axis direction).

The first damper protrusions 52 may be formed to have the same length on the basis of the first axial direction (X-axis direction). As shown in FIG. 12, the first damper protrusions 52 which are disposed further outward from a central point CP on the basis of the first axial direction (X-axis direction) may be formed to have a greater length. The central point CP means a point spaced at the same distance apart from the both ends of the first damper body 51 on the basis of the first axial direction (X-axis direction). Also, when being further outward from the central point CP on the basis of the first axial direction (X-axis direction), a gap between the first damper protrusions 52 may increase.

The first damper portion 5 further includes a plurality of first damper grooves 53. The remaining part of the first damper portion 5 excluding parts in which the first damper grooves 53 are formed are coupled to the first support portion 3. The first damper grooves 53 may be formed in a bottom surface of the first damper body 51. The first damper grooves 53 may be formed to have a rectangular parallelepiped shape parallel to the first axial direction (X-axis direction). The first damper grooves 53 are disposed to be spaced apart from each other in the second axial direction (Y-axis direction). A contact area of the first damper portion 5 which comes into contact with the first support portion 3 may be reduced using the first damper grooves 53. Also, elastic deformation for the first damper body 51 may be more smoothly performed due to the first damper grooves 53. Accordingly, the first damper portion 5 is implemented to reduce the level of vibrations, shaking, or the like being transferred from the first damper body 51 to the first damper protrusions 52 so as to further reduce the level of vibrations, shaking, or the like transferred to the one side of the core 100. The first damper grooves 53 may be formed to have a rectangular parallelepiped shape as a whole but is not limited thereto, and may be formed in other shapes capable of reducing the level of vibrations, shaking, and the like being transferred. For example, the first damper grooves 53 may be formed to have a size which is reduced when gradually receding upward from the first damper body 51. In this case, an inner wall of the first damper body 51 in which the first damper grooves 53 are formed may be formed to have a curved surface.

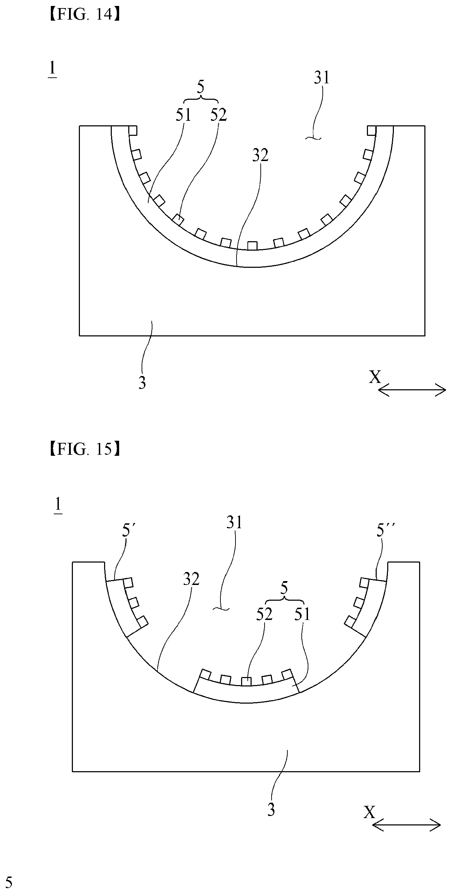

As shown in FIG. 14, the first damper portion 5 may be coupled to the first support portion 3 to cover an entire surface of the first support surface 32. In this case, the first damper protrusions 52 may be disposed to be spaced apart from each other along a curvature of the first support surface 32.

As shown in FIG. 15, the first damper portion 5 may be coupled to the first support portion 3 to cover a part of the first support surface 32. When the copper foil 200 wound on the core 100 is accommodated in the accommodation space 21, the first damper portion 5 may be coupled to the first support portion 3 to be disposed below the one side of the core 100.

Here, the copper foil accommodation apparatus 1 according to the present invention may include a plurality of such first damper portions 5. The first damper portions 5, 5', and 5" may be coupled to the first support surface 32 at positions spaced apart from one other. Although three first damper portions 5, 5', and 5" are coupled to the first support surface 32 in FIG. 15, the present invention is not limited thereto and two or four or more first damper portions 5 may be coupled to the first support surface 32.

When the copper foil accommodation apparatus 1 according to the present invention includes the first damper portions 5, 5', and 5", the first damper portion 5 may be disposed below the one side of the core 100 and the first damper portions 5', and 5" may be disposed on both sides of the first damper portion 5 on the basis of the first axial direction (X-axis direction). The first damper portions 5' and 5" may be disposed to be spaced apart ambilaterally from the one side of the core 100. The first damper portions 5' and 5" may come into contact with the one side of the core 100.

As shown in FIG. 15, all the first damper portions 5, 5', and 5" may be implemented to have the first damper protrusions 52.

As shown in FIG. 16, the copper foil accommodation apparatus 1 according to the present invention may be implemented through a combination of the first damper portion 5 and a first auxiliary damper 20. Unlike the first damper portion 5 implemented to come into partial contact with the one side of the core 100 using the first damper protrusions 52, the first auxiliary damper 20 may be formed to come into entire contact with the one side of the core 100. That is, the first auxiliary damper 20 may be implemented without the first damper protrusions 52. In this case, a surface of the first auxiliary damper 20 which comes into contact with the one side of the core 100 may be formed to have a curved surface. Since the manufacturing costs of the first auxiliary damper 20 is lower than that of the first damper portion 5, the manufacturing costs of the copper foil accommodation apparatus 1 according to the present invention may be reduced through the combination of the first auxiliary damper 20 and the first damper portion 5. The first auxiliary damper 20 and the first damper portion 5 may be formed of different materials. The copper foil accommodation apparatus 1 according to the present invention may include a plurality of such first auxiliary dampers 20. In this case, the first damper portion 5 may be disposed below the one side of the core 100, and the first auxiliary dampers 20 and 20' may be disposed on both sides of the first damper portion 5 on the basis of the first axial direction (X-axis direction). The first auxiliary dampers 20 and 20' may be disposed to be spaced apart ambilaterally from the one side of the core 100. The first auxiliary dampers 20 and 20' may come into contact with the one side of the core 100.

As shown in FIG. 17, on the basis of the second axial direction (Y-axis direction), the first damper portion 5 may be formed to have the same length as that of the first support surface 32. The first damper portion 5 may be disposed at a middle position spaced at the same distance apart from both ends of the first support portion 3 on the basis of the first axial direction (X-axis direction). The first auxiliary dampers 20 and 20' may be disposed on both sides of the first damper portion 5 on the basis of the first axial direction (X-axis direction). On the basis of the second axial direction (Y-axis direction), the first auxiliary dampers 20 and 20' may be formed to have the same length as that of the first support surface 32. Although not shown in the drawing, the first damper portions 5' and 5" (refer to FIG. 15) may be additionally disposed on both sides of the first damper portion 5 on the basis of the first axial direction (X-axis direction).

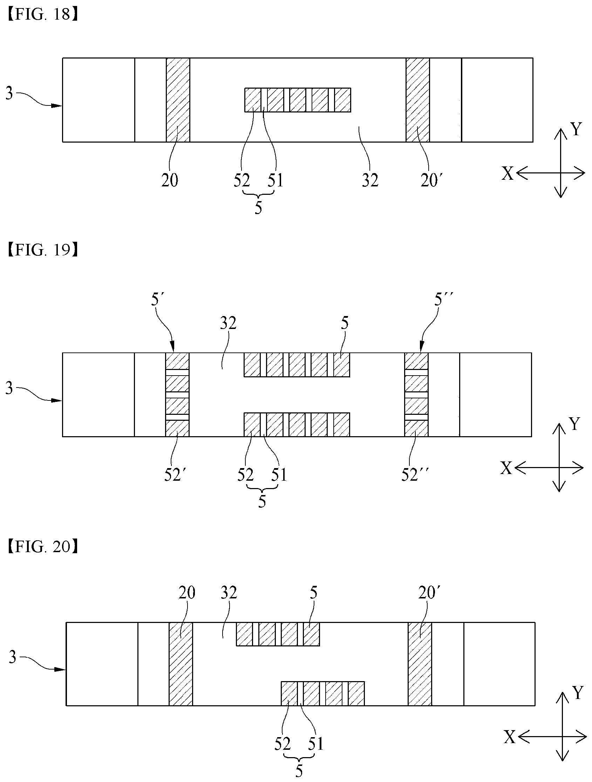

As shown in FIG. 18, on the basis of the second axial direction (Y-axis direction), the first damper portion 5 may be formed to have a smaller length than that of the first support surface 32. The first damper portion 5 may be disposed at the middle position on the basis of the first axial direction (X-axis direction). The first damper portion 5 may be disposed at a position spaced at the same distance apart from both ends of the first support portion 3 on the basis of the second axial direction (Y-axis direction). The first auxiliary dampers 20 and 20' may be disposed on both sides of the first damper portion 5 on the basis of the first axial direction (X-axis direction). On the basis of the second axial direction (Y-axis direction), the first auxiliary dampers 20 and 20' may be formed to have the same length as that of the first support surface 32. Although not shown in the drawing, the first damper portions 5' and 5" (refer to FIG. 15) may be additionally disposed on both sides of the first damper portion 5 on the basis of the first axial direction (X-axis direction).

As shown in FIG. 19, on the basis of the second axial direction (Y-axis direction), the first damper portion 5 may be formed to have a smaller length than that of the first support surface 32. The first damper portion 5 may be disposed at the middle position on the basis of the first axial direction (X-axis direction). A plurality of first damper portions 5 may be disposed at the middle position. The first damper portions 5 may be disposed in the middle position to be spaced apart from each other in the second axial direction (Y-axis direction). The first damper portions 5' and 5" may be additionally disposed on both sides of the first damper portions 5 on the basis of the first axial direction (X-axis direction). The first damper portions 5' and 5" may be disposed so that first damper protrusions 52' and 52" are spaced apart from each other in the second axial direction (Y-axis direction). Although not shown in the drawing, the first auxiliary dampers 20 and 20' (refer to FIG. 18) may be disposed on both sides of the first damper portions 5 on the basis of the first axial direction (X-axis direction).

As shown in FIG. 20, on the basis of the second axial direction (Y-axis direction), the first damper portion 5 may be formed to have a smaller length than that of the first support surface 32. The first damper portion 5 may be disposed at the middle position on the basis of the first axial direction (X-axis direction). A plurality of first damper portions 5 may be disposed at the middle position. The first damper portions 5 may be disposed at the middle position to be spaced apart from each other in the second axial direction (Y-axis direction). The first damper portions 5 may be disposed at different distances apart from one end of the first support portion 3 on the basis of the first axial direction (X-axis direction). That is, the first damper portions 5 may be disposed at positions offset from each other on the basis of the first axial direction (X-axis direction). The first auxiliary dampers 20 and 20' may be disposed on both sides of the first damper portions 5 on the basis of the first axial direction (X-axis direction). Although not shown in the drawing, the first damper portions 5' and 5" (refer to FIG. 19) may be additionally disposed on both sides of the first damper portions 5 on the basis of the first axial direction (X-axis direction).

Referring to FIGS. 1 to 20, the second damper portion 6 is coupled to the second support portion 4. Since the second damper portion 6 may be implemented to be approximately equal to the first damper portion 5 without being coupled to the second support portion 4 to support the other side of the core 100, a detailed description thereof will be omitted.

Referring to FIGS. 1 and 2, the copper foil accommodation apparatus 1 according to the present invention may include a first sidewall portion 8 and a second sidewall portion 9.

The first sidewall portion 8 may be detachably coupled to one side of the accommodation body 2. When the first sidewall portion 8 is coupled to the one side of the accommodation body 2, the one side of the accommodation body 2 may be closed. The first sidewall portion 8 may be disposed at a position spaced apart from the one side of the core 100 accommodated in the accommodation space 21.

The first sidewall portion 8 may include a first sidewall member 81. The first sidewall member 81 protrudes from the first sidewall portion 8. When the first sidewall portion 8 is coupled to the one side of the accommodation body 2, the first sidewall member 81 may be disposed above the one side of the core 100. In this case, the one side of the core 100 may be disposed between the first sidewall member 81 and the first damper portion 5. Accordingly, the copper foil accommodation apparatus 1 according to the present invention may reinforce a supporting force for the one side of the core 100.

The second sidewall portion 9 may be detachably coupled to the other side of the accommodation body 2. When the second sidewall portion 9 is coupled to the other side of the accommodation body 2, the other side of the accommodation body 2 may be closed. The second sidewall portion 9 may be disposed at a position spaced apart from the other side of the core 100 accommodated in the accommodation space 21.

The second sidewall portion 9 may include a second sidewall member 91. The second sidewall member 91 protrudes from the second sidewall portion 9. When the second sidewall portion 9 is coupled to the other side of the accommodation body 2, the second sidewall member 91 may be disposed above the other side of the core 100. In this case, the other side of the core 100 may be disposed between the second sidewall member 91 and the second damper portion 6. Accordingly, the copper foil accommodation apparatus 1 according to the present invention may reinforce a supporting force for the other side of the core 100.

Referring to FIGS. 2, 21, and 22, the copper foil accommodation apparatus 1 according to the present invention may include a first support damper 30.

The first support damper 30 may be coupled to the first support portion 3. When the first support portion 3 is coupled to the accommodation body 2, the first support damper 30 may be disposed between the first support portion 3 and the accommodation body 2. The first support damper 30 may be formed of an elastically deformable material. For example, the first support damper 30 may be formed of rubber, urethane, or the like.

The first support damper 30 may be coupled to a first outer surface 33 of the first support portion 3. When the first support portion 3 is coupled to the accommodation body 2, the first outer surface 33 is a surface facing the accommodation body 2. Accordingly, when the first support portion 3 is coupled to the accommodation body 2, the first support damper 30 may be disposed between the first outer surface 33 and the accommodation body 2. Accordingly, the first support damper 30 may absorb vibrations, shaking, and the like which are transferred through the accommodation body 2. Accordingly, the first support damper 30 may reduce the level of vibrations, shaking, and the like being transferred to the first support portion 3 so as to reduce the level of vibrations, shaking, and the like being transferred to the one side of the core 100. Accordingly, the copper foil accommodation apparatus 1 according to the present invention may reduce a defect rate of the copper foil 200 occurring due to vibrations, shaking, and the like which occur during the transportation process. Accordingly, the copper foil accommodation apparatus 1 according to the present invention may improve the quality of the copper foil 200 which has been transported as well as improve stability and ease of transport work for the copper foil 200.

The first support damper 30 may include a first support body 30a and a plurality of first support protrusions 30b.

The first support body 30a is disposed to face the accommodation body 2. When the first support portion 3 is coupled to the accommodation body 2, the first support body 30a may come into contact with the accommodation body 2.

The first support protrusions 30b protrude from the first support body 30a. The first support protrusions 30b may protrude from the first support body 30a toward the first support portion 3. The first support protrusions 30b may be disposed to be spaced apart from each other. Accordingly, the first support protrusions 30b may come into contact with mutually different parts of the first support portion 3. A contact area of the first support damper 30 which comes into contact with the first support portion 3 may be reduced using the first support protrusions 30b. Also, elastic deformation for each of the first support protrusions 30b may be further smoothly performed. Accordingly, the first support damper 30 may be implemented to further reduce the level of vibrations, shaking, or the like being transferred to the first support portion 3.

As shown in FIG. 21, the first support damper 30 may be coupled to the first support portion 3 to cover an entire surface of the first outer surface 33.

As shown in FIG. 22, the first support damper 30 may be coupled to the first support portion 3 to cover a part of the first outer surface 33. In this case, the copper foil accommodation apparatus 1 according to the present invention may include a plurality of such first support dampers 30. The first support dampers 30, 30', and 30" may be disposed on the first outer surface 33 at positions spaced apart from one another.

Although not shown in the drawings, the first support damper 30 may be implemented to include only the first support body 30a without the first support protrusions 30b. Although not shown in the drawings, the copper foil accommodation apparatus 1 according to the present invention may be implemented to include both the first damper portion 5 and the first support damper 30.

Referring to FIGS. 2, 23, and 24, the copper foil accommodation apparatus 1 according to the present invention may include a second support damper 40.

The second support damper 40 may be coupled to the second support portion 4. When the second support portion 4 is coupled to the accommodation body 2, the second support damper 40 may be disposed between the second support portion 4 and the accommodation body 2. The second support damper 40 may be formed of an elastically deformable material. For example, the second support damper 40 may be formed of rubber, urethane, or the like.

The second support damper 40 may be coupled to a second outer surface 43 of the second support portion 4. When the second support portion 4 is coupled to the accommodation body 2, the second outer surface 43 is a surface facing the accommodation body 2. Accordingly, when the second support portion 4 is coupled to the accommodation body 2, the second support damper 40 may be disposed between the second outer surface 43 and the accommodation body 2. Accordingly, the second support damper 40 may absorb vibrations, shaking, and the like being transferred through the accommodation body 2. Accordingly, the second support damper 40 may reduce the level of vibrations, shaking, and the like being transferred to the second support portion 4 so as to reduce the level of vibrations, shaking, and the like being transferred to the one side of the core 100. Accordingly, the copper foil accommodation apparatus 1 according to the present invention may reduce a defect rate of the copper foil 200 occurring due to vibrations, shaking, and the like which occur during the transportation process. Accordingly, the copper foil accommodation apparatus 1 according to the present invention may improve the quality of the copper foil 200 which has been transported as well as improve stability and ease of transport work for the copper foil 200.

The second support damper 40 may include a second support body 40a and a plurality of second support protrusions 40b.

The second support body 40a is disposed to face the accommodation body 2. When the second support portion 4 is coupled to the accommodation body 2, the second support body 40a may come into contact with the accommodation body 2.

The second support protrusions 40b protrude from the second support body 40a. The second support protrusions 40b may protrude from the second support body 40a toward the second support portion 4. The second support protrusions 40b may be disposed to be spaced apart from each other. Accordingly, the second support protrusions 40b may come into contact with mutually different parts of the second support portion 4. A contact area of the second support damper 40 which comes into contact with the second support portion 4 may be reduced using the second support protrusions 40b. Also, elastic deformation for each of the second support protrusions 40b may be further smoothly performed. Accordingly, the second support damper 40 may be implemented to further reduce the level of vibrations, shaking, or the like being transferred to the second support portion 4.

As shown in FIG. 23, the second support damper 40 may be coupled to the second support portion 4 to cover an entire surface of the second outer surface 43.

As shown in FIG. 24, the second support damper 40 may be coupled to the second support portion 4 to cover a part of the second outer surface 43. In this case, the copper foil accommodation apparatus 1 according to the present invention may include a plurality of such second support dampers 40. The second support dampers 40, 40', and 40" may be disposed on the second outer surface 43 at positions spaced apart from one another.

Although not shown in the drawing, the second support damper 40 may be implemented to include only the second support body 40a without the second support protrusions 40b. Although not shown in the drawings, the copper foil accommodation apparatus 1 according to the present invention may be implemented to include both the second damper portion 6 and the second support damper 40.

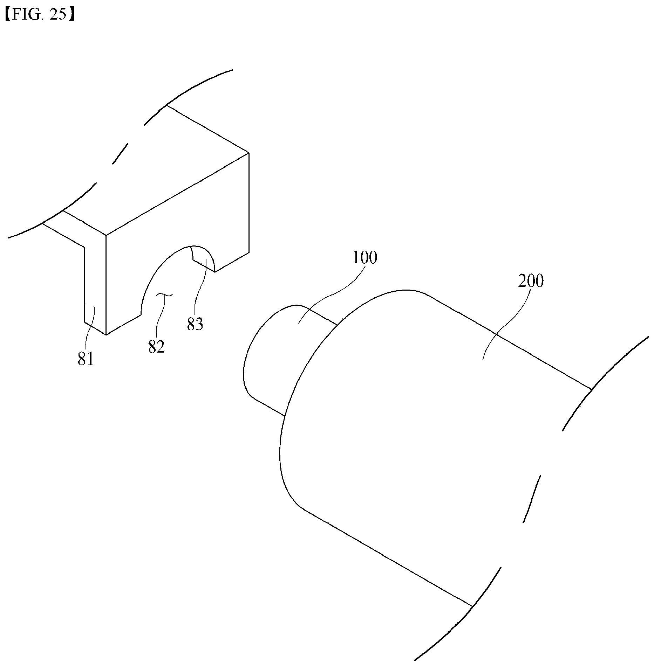

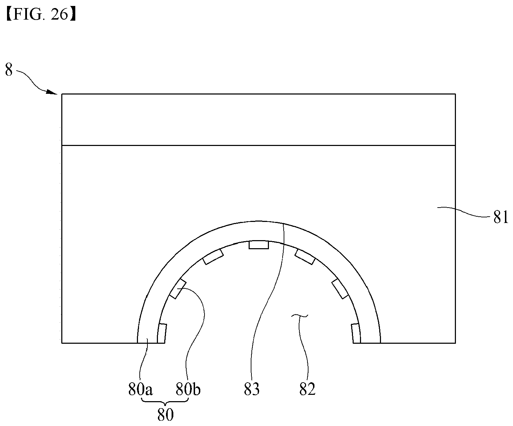

Referring to FIGS. 25 and 26, the first sidewall portion 8 may include a first sidewall groove 82 into which the core 100 is inserted. The first sidewall groove 82 may be formed in the first sidewall member 81. The first sidewall member 81 may be formed to have an open lower side due to the first sidewall groove 82. Accordingly, the one side of the core 100 may be inserted into the first sidewall groove 82 through the open lower side of the first sidewall member 81. The first sidewall groove 82 may be formed to have a semicircular shape as a whole but is not limited thereto, and the first sidewall groove 82 may be formed in other shapes as long as the core 100 can be inserted thereinto.

The first sidewall portion 8 may include a first sidewall surface 83. The first sidewall surface 83 may be formed in the first sidewall member 81. The first sidewall surface 83 may support the core 100 inserted into the first sidewall groove 82. The first sidewall surface 83 may be a surface of the first sidewall member 81 which faces the first sidewall groove 82. The first sidewall surface 83 may be formed to be a curved surface.

Here, the copper foil accommodation apparatus 1 according to the present invention may include a first sidewall damper 80 coupled to the first sidewall portion 8.

The first sidewall damper 80 may be coupled to the first sidewall member 81. When the first sidewall portion 8 is coupled to the accommodation body 2, the first sidewall damper 80 may be disposed between the first sidewall member 81 and the one side of the core 100. The first sidewall damper 80 may be formed of an elastically deformable material. For example, the first sidewall damper 80 may be formed of rubber, urethane, or the like. When the copper foil 200 wound on the core 100 is accommodated in the accommodation body 2 and then the first sidewall portion 8 is coupled to the accommodation body 2, the first sidewall damper 80 may be coupled to the first sidewall member 81 to be disposed above the one side of the core 100.

The first sidewall damper 80 may be coupled to the first sidewall surface 83 of the first sidewall portion 8. Accordingly, when the first sidewall portion 8 is coupled to the accommodation body 2, the first sidewall damper 80 may come into contact with the one side of the core 100. Accordingly, the first sidewall damper 80 may absorb vibrations, shaking, and the like being transferred through the accommodation body 2. Accordingly, the first sidewall damper 80 may reduce the level of vibrations, shaking, or the like being transferred to the one side of the core 100. Accordingly, the copper foil accommodation apparatus 1 according to the present invention may reduce a defect rate of the copper foil 200 occurring due to vibrations, shaking, and the like which occur during the transportation process. Accordingly, the copper foil accommodation apparatus 1 according to the present invention may improve the quality of the copper foil 200 which has been transported as well as improve stability and ease of transport work for the copper foil 200.

The first sidewall damper 80 may include a first sidewall body 80a and a plurality of first sidewall protrusions 80b.

The first sidewall body 80a is coupled to the first sidewall portion 8. The first sidewall body 80a may be coupled to the first sidewall surface 83. The first sidewall body 80a may be coupled to the first sidewall surface 83 using an adhesive force. The first sidewall body 80a may be coupled to the first sidewall surface 83 using an additional first coupling member (not shown). The first coupling member may be inserted into the first sidewall body 80a and the first sidewall member 81 between the first sidewall protrusions 80b so as to fix the first sidewall damper 80 to the first sidewall member 81. For example, the first coupling member may be implemented as a staple or the like which is fixedly insertable into the first sidewall body 80a and the first sidewall member 81.

The first sidewall protrusions 80b protrude from the first sidewall body 80a. The first sidewall protrusions 80b may be disposed to be spaced apart from each other. Accordingly, the first sidewall protrusions 80b may come into contact with mutually different parts of the one side of the core 100. A contact area of the first sidewall damper 80 which comes into contact with the one side of the core 100 may be reduced using the first sidewall protrusions 80b. Also, elastic deformation for each of the first sidewall protrusions 80b may be further smoothly performed. Accordingly, the first sidewall damper 80 may be implemented to further reduce the level of vibrations, shaking, or the like being transferred to the one side of the core 100. The first sidewall protrusions 80b may be formed to have a rectangular parallelepiped shape as a whole but is not limited thereto, and may be formed in other shapes capable of reducing the level of vibrations, shaking, and the like being transferred to the one side of the core 100. For example, the first sidewall protrusions 80b may be formed to have a size which is reduced when gradually protruding from the first sidewall body 80a. In this case, parts of the first sidewall protrusions 80b which come into contact with the one side of the core 100 may be formed to have curved surfaces.

As shown in FIG. 26, the first sidewall damper 80 may be coupled to the first sidewall member 81 to cover an entire surface of the first sidewall surface 83. In this case, the first sidewall protrusions 80b may be disposed to be spaced apart from each other along a curvature of the first sidewall surface 83.

Although not shown in the drawing, the first sidewall damper 80 may be coupled to the first sidewall member 81 to cover a part of the first sidewall surface 83. In this case, the copper foil accommodation apparatus 1 according to the present invention may include a plurality of such first sidewall dampers 80. The first sidewall dampers 80 may be disposed to be spaced apart from each other along the first sidewall surface 83. Modified examples of the first damper portion 5 shown in FIGS. 15 to 20 may be equally applied to the first sidewall damper 80.

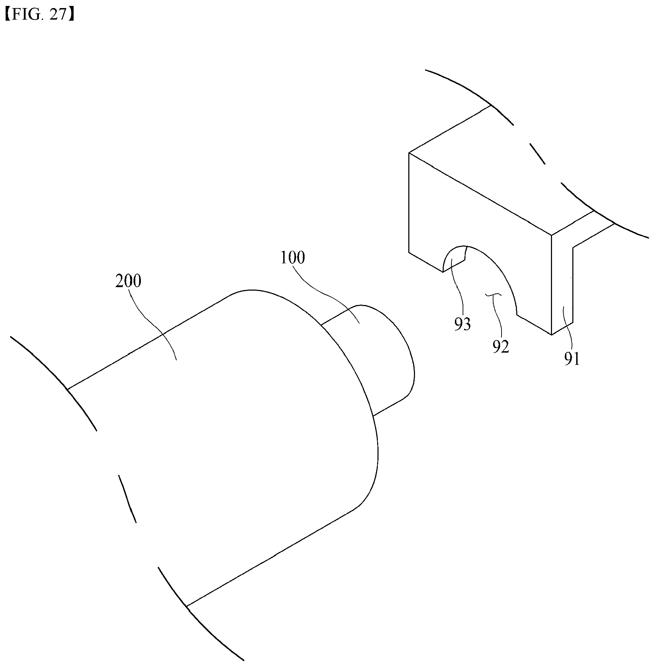

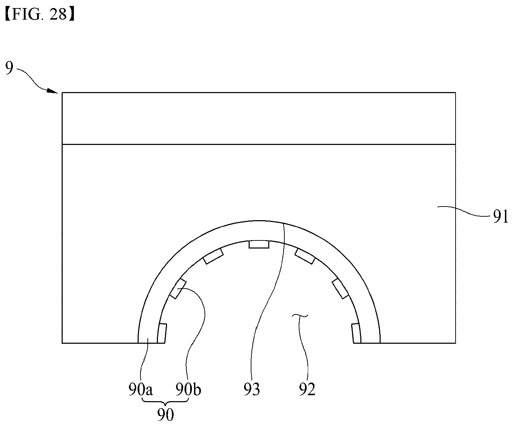

Referring to FIGS. 27 and 28, the second sidewall portion 9 may include a second sidewall groove 92 into which the core 100 is inserted. The second sidewall groove 92 may be formed in the second sidewall member 91. The second sidewall member 91 may be formed to have an open lower side due to the second sidewall groove 92. Accordingly, the other side of the core 100 may be inserted into the second sidewall groove 92 through the open lower side of the second sidewall member 91. The second sidewall groove 92 may be formed to have a semicircular shape as a whole but is not limited thereto, and the second sidewall groove 92 may be formed in other shapes as long as the core 100 can be inserted thereinto.

The second sidewall portion 9 may include a second sidewall surface 93. The second sidewall surface 93 may be formed in the second sidewall member 91. The second sidewall surface 93 may support the core 100 inserted into the second sidewall groove 92. The second sidewall surface 93 may be a surface of the second sidewall member 91 which faces the second sidewall groove 92. The second sidewall surface 93 may be formed to be a curved surface.

Here, the copper foil accommodation apparatus 1 according to the present invention may include a second sidewall damper 90 coupled to the second sidewall portion 9.

The second sidewall damper 90 may be coupled to the second sidewall member 91. When the second sidewall portion 9 is coupled to the accommodation body 2, the second sidewall damper 90 may be disposed between the second sidewall member 91 and the other side of the core 100. The second sidewall damper 90 may be formed of an elastically deformable material. For example, the second sidewall damper 90 may be formed of rubber, urethane, or the like. When the copper foil 200 wound on the core 100 is accommodated in the accommodation body 2 and then the second sidewall portion 9 is coupled to the accommodation body 2, the second sidewall damper 90 may be coupled to the second sidewall member 91 to be disposed above the other side of the core 100.

The second sidewall damper 90 may be coupled to the second sidewall surface 93 of the second sidewall portion 9. Accordingly, when the second sidewall portion 9 is coupled to the accommodation body 2, the second sidewall damper 90 may come into contact with the other side of the core 100. Accordingly, the second sidewall damper 90 may absorb vibrations, shaking, and the like being transferred through the accommodation body 2. Accordingly, the second sidewall damper 90 may reduce the level of vibrations, shaking, or the like being transferred to the other side of the core 100. Accordingly, the copper foil accommodation apparatus 1 according to the present invention may reduce a defect rate of the copper foil 200 occurring due to vibrations, shaking, and the like which occur during the transportation process. Accordingly, the copper foil accommodation apparatus 1 according to the present invention may improve the quality of the copper foil 200 which has been transported as well as improve stability and ease of transport work for the copper foil 200.

The second sidewall damper 90 may include a second sidewall body 90a and a plurality of second sidewall protrusions 90b.

The second sidewall body 90a is coupled to the second sidewall portion 9. The second sidewall body 90a may be coupled to the second sidewall surface 93. The second sidewall body 90a may be coupled to the second sidewall surface 93 using an adhesive force. The second sidewall body 90a may be coupled to the second sidewall surface 93 using an additional second coupling member (not shown). The second coupling member may be inserted into the second sidewall body 90a and the second sidewall member 91 between the second sidewall protrusions 90b so as to fix the second sidewall damper 90 to the second sidewall member 91. For example, the second coupling member may be implemented as a staple or the like which is fixedly insertable into the second sidewall body 90a and the second sidewall member 91.

The second sidewall protrusions 90b protrude from the second sidewall body 90a. The second sidewall protrusions 90b may be disposed to be spaced apart from each other. Accordingly, the second sidewall protrusions 90b may come into contact with mutually different parts of the other side of the core 100. A contact area of the second sidewall damper 90 which comes into contact with the other side of the core 100 may be reduced using the second sidewall protrusions 90b. Also, elastic deformation for each of the second sidewall protrusions 90b may be further smoothly performed. Accordingly, the second sidewall damper 90 may be implemented to further reduce the level of vibrations, shaking, or the like being transferred to the other side of the core 100. The second sidewall protrusions 90b may be formed to have a rectangular parallelepiped shape as a whole but is not limited thereto, and may be formed in other shapes capable of reducing the level of vibrations, shaking, and the like being transferred to the other side of the core 100. For example, the second sidewall protrusions 90b may be formed to have a size which is reduced when gradually protruding from the second sidewall body 90a. In this case, parts of the second sidewall protrusions 90b which come into contact with the other side of the core 100 may be formed to have curved surfaces.

As shown in FIG. 28, the second sidewall damper 90 may be coupled to the second sidewall member 91 to cover an entire surface of the second sidewall surface 93. In this case, the second sidewall protrusions 90b may be disposed to be spaced apart from each other along a curvature of the second sidewall surface 93.

Although not shown in the drawing, the second sidewall damper 90 may be coupled to the second sidewall member 91 to cover a part of the second sidewall surface 93. In this case, the copper foil accommodation apparatus 1 according to the present invention may include a plurality of such second sidewall dampers 90. The second sidewall dampers 90 may be disposed to be spaced apart from each other along the second sidewall surface 93. Modified examples of the first damper portion 5 shown in FIGS. 15 to 20 may be equally applied to the second sidewall damper 90.

## Claims

1. An apparatus (1) for accommodating copper foil, comprising:
an accommodation body (2) in which an accommodation space (21) for accommodating copper foil (200) wound on a core (100) is provided;
a first support portion (3) coupled to the accommodation body (2) to support one side of the core (100);
a second support portion (4) coupled to the accommodation body (2) to support the other side of the core (100);
a first damper portion (5) coupled to the first support portion (3) to be disposed between the first support portion (3) and the one side of the core (100); and
a second damper portion (6) coupled to the second support portion (4) to be disposed between the second support portion (4) and the other side of the core (100),
wherein the first damper portion (5) comprises
a first damper body (51) coupled to the first support portion (3) and a plurality of first damper protrusions (52) protruding from the first damper body (51), **characterised by**
a plurality of first damper grooves (53) formed in the first damper portion (51), while the remaining part excluding parts in which the first damper grooves (53) are formed is coupled to the first support portion (3),
wherein the first damper protrusions (52) are disposed to be spaced apart from each other in a first axial direction, and
wherein the first damper grooves (53) are disposed to be spaced apart from each other in a second axial direction, the second axial direction and the first axial direction being perpendicular to each other in one plane.

2. The apparatus (1) of claim 1, wherein the first support portion (3) comprises:
a first support groove (31) into which the core (100) is inserted; and
a first support surface (32) configured to support the one side of the core (100) inserted into the first support groove (31).

3. The apparatus (1) of claim 2, wherein the first support surface (32) is formed to be a curved surface.

4. The apparatus (1) of claim 1, wherein the first support portion (3) comprises a first insertion member (3a) to be inserted into the accommodation body (2) and a first reduction groove (3b) formed in the first insertion member (3a), and
wherein the accommodation body (2) comprises a first insertion groove (22) to allow a part of the first insertion member (3a) excluding the first reduction groove (3b) to be inserted thereinto.

5. The apparatus (1) of claim 1, wherein the first damper protrusions (52) come into contact with different parts of the one side of the core (100).

6. The apparatus (1) of claim 2, wherein the first damper portion (5) is coupled to the first support portion (3) to cover an entire surface of the first support surface (32).

7. The apparatus (1) of claim 2, wherein the first damper portion (5) is coupled to the first support portion (3) to cover a part of the first support surface (32).

8. The apparatus (1) of claim 2, wherein a plurality of first damper portions (5) are coupled to the first support portion (3), and
wherein the first damper portions (5) are coupled to the first support surface (32) at positions spaced apart from each other.

9. The apparatus (1) of claim 1, comprising a first auxiliary damper (20) coupled to the first support portion (3),
wherein the first damper protrusions (52) are disposed to be spaced apart from each other to come into partial contact with the one side of the core (100), and
wherein the first auxiliary damper (20) is formed to allow an entire surface thereof to come into contact with the one side of the core (100).

10. The apparatus (1) of claim 1, comprising a first support damper (30) coupled to the first support portion (3) to be disposed between the first support portion (3) and the accommodation body (2),
wherein the first support damper (30) is formed of an elastically deformable material.

11. The apparatus (1) of claim 1, comprising a first sidewall portion (8) detachably coupled to one side of the accommodation body (2) and a first sidewall damper (80) coupled to the first sidewall portion (8) to be disposed between the first sidewall portion (8) and the one side of the core (100),
wherein the first sidewall damper (80) comprises a first sidewall body (80a) coupled to the first sidewall portion (8) and a plurality of first sidewall protrusions (80b) protruding from the first sidewall body (80a), and
wherein the first sidewall protrusions (80b) are disposed to be spaced apart from each other to come into contact with different parts of the one side of the core (100).

## Patentansprüche

1. Vorrichtung (1) zur Aufnahme von Kupferfolie, umfassend:
einen Aufnahmekörper (2), in dem ein Aufnahmeraum (21) zur Aufnahme von Kupferfolie (200), die auf einen Kern (100) gewickelt ist, vorgesehen ist;
einen ersten Stützabschnitt (3), der so mit dem Aufnahmekörper (2) verbunden ist, dass er eine Seite des Kerns (100) stützt;
einen zweiten Stützabschnitt (4), der so mit dem Aufnahmekörper (2) verbunden ist, dass er die andere Seite des Kerns (100) stützt;
einen ersten Dämpferabschnitt (5), der so mit dem ersten Stützabschnitt (3) verbunden ist, dass er zwischen dem ersten Stützabschnitt (3) und der einen Seite des Kerns (100) angeordnet ist; und
einen zweiten Dämpferabschnitt (6), der so mit dem zweiten Stützabschnitt (4) verbunden ist, dass er zwischen dem zweiten Stützabschnitt (4) und der anderen Seite des Kerns (100) angeordnet ist,
wobei der erste Dämpferabschnitt (5) umfasst:
einen ersten Dämpferkörper (51), der mit dem ersten Stützabschnitt (3) verbunden ist, und eine Mehrzahl von ersten Dämpfervorsprüngen (52), die von dem ersten Dämpferkörper (51) hervorstehen, **dadurch gekennzeichnet, dass**
eine Vielzahl von ersten Dämpfernuten (53), die in dem ersten Dämpferabschnitt (51) ausgebildet sind, während der verbleibende Teil mit Ausnahme der Teile, in denen die ersten Dämpfernuten (53) ausgebildet sind, mit dem ersten Stützabschnitt (3) verbunden ist,
wobei die ersten Dämpfervorsprünge (52) so angeordnet sind, dass sie in einer ersten axialen Richtung voneinander beabstandet sind, und
wobei die ersten Dämpfernuten (53) so angeordnet sind, dass sie in einer zweiten axialen Richtung voneinander beabstandet sind, wobei die zweite axiale Richtung und die erste axiale Richtung in einer Ebene rechtwinklig zueinander sind.

2. Vorrichtung (1) nach Anspruch 1, wobei der erste Stützabschnitt (3) umfasst:
eine erste Stütznut (31), in die der Kern (100) eingesetzt ist; und
eine erste Stützfläche (32), die so konfiguriert ist, dass sie die eine Seite des in die erste Stütznut (31) eingesetzten Kerns (100) stützt.

3. Vorrichtung (1) nach Anspruch 2, wobei die erste Stützfläche (32) als gekrümmte Fläche ausgebildet ist.

4. Vorrichtung (1) nach Anspruch 1, wobei der erste Stützabschnitt (3) ein erstes Einführelement (3a), das in den Aufnahmekörper (2) einzuführen ist, und eine erste Reduktionsnut (3b), die in dem ersten Einführelement (3a) ausgebildet ist, umfasst, und
wobei der Aufnahmekörper (2) eine erste Einführungsnut (22) aufweist, um zu ermöglichen, dass ein Teil des ersten Einführungselements (3a) mit Ausnahme der ersten Reduktionsnut (3b) in diese eingeführt werden kann.

5. Vorrichtung (1) nach Anspruch 1, wobei die ersten Dämpfervorsprünge (52) mit verschiedenen Teilen der einen Seite des Kerns (100) in Kontakt kommen.

6. Vorrichtung (1) nach Anspruch 2, wobei der erste Dämpferabschnitt (5) so mit dem ersten Stützabschnitt (3) verbunden ist, dass er eine gesamte Fläche der ersten Stützfläche (32) abdeckt.

7. Vorrichtung (1) nach Anspruch 2, wobei der erste Dämpferabschnitt (5) so mit dem ersten Stützabschnitt (3) verbunden ist, dass er einen Teil der ersten Stützfläche (32) abdeckt.

8. Vorrichtung (1) nach Anspruch 2, wobei mehrere erste Dämpferabschnitte (5) mit dem ersten Stützabschnitt (3) verbunden sind, und
wobei die ersten Dämpferabschnitte (5) mit der ersten Stützfläche (32) an voneinander beabstandeten Positionen verbunden sind.

9. Vorrichtung (1) nach Anspruch 1, umfassend einen ersten Hilfsdämpfer (20), der mit dem ersten Stützabschnitt (3) verbunden ist,
wobei die ersten Dämpfervorsprünge (52) so angeordnet sind, dass sie voneinander beabstandet sind, um in teilweisen Kontakt mit der einen Seite des Kerns (100) zu kommen, und
wobei der erste Hilfsdämpfer (20) so ausgebildet ist, dass seine gesamte Fläche in Kontakt mit der einen Seite des Kerns (100) kommen kann.

10. Vorrichtung (1) nach Anspruch 1, umfassend einen ersten Stützdämpfer (30), der so mit dem ersten Stützabschnitt (3) verbunden ist, dass er zwischen dem ersten Stützabschnitt (3) und dem Aufnahmekörper (2) angeordnet ist,
wobei der erste Stützdämpfer (30) aus einem elastisch verformbaren Material gebildet ist.

11. Vorrichtung (1) nach Anspruch 1, umfassend einen ersten Seitenwandabschnitt (8), der abnehmbar mit einer Seite des Aufnahmekörpers (2) verbunden ist, und einen ersten Seitenwanddämpfer (80), der so mit dem ersten Seitenwandabschnitt (8) verbunden ist, dass er zwischen dem ersten Seitenwandabschnitt (8) und der einen Seite des Kerns (100) angeordnet ist,
wobei der erste Seitenwanddämpfer (80) einen ersten Seitenwandkörper (80a), der mit dem ersten Seitenwandabschnitt (8) verbunden ist, und eine Vielzahl von ersten Seitenwandvorsprüngen (80b) umfasst, die von dem ersten Seitenwandkörper (80a) hervorstehen, und
wobei die ersten Seitenwandvorsprünge (80b) so angeordnet sind, dass sie voneinander beabstandet sind, um mit verschiedenen Teilen der einen Seite des Kerns (100) in Kontakt zu kommen.

## Revendications

1. Appareil (1) destiné à recevoir une feuille de cuivre, comportant :
un corps de réception (2) dans lequel un espace de réception (21) est prévu pour recevoir une feuille de cuivre (200) enroulée sur un mandrin (100) ;
une première portion de support (3) couplée au corps de réception (2) pour supporter un premier côté du mandrin (100) ;
une seconde portion de support (4) couplée au corps de réception (2) pour supporter le second côté du mandrin (100) ;
une première portion d'amortissement (5) couplée à la première portion de support (3) pour être disposée entre la première portion de support (3) et le premier côté du mandrin (100) ; et
une seconde portion d'amortissement (6) couplée à la seconde portion de support (4) pour être disposée entre la seconde portion de support (4) et le second côté du mandrin (100),
dans lequel la première portion d'amortissement (5) comporte
un premier corps d'amortissement (51) couplé à la première portion de support (3) et une pluralité de premières saillies d'amortissement (52) faisant saillie à partir du premier corps d'amortissement (51), **caractérisé par**
une pluralité de premières rainures d'amortissement (53) formées dans la première portion d'amortissement (51), alors que la partie restante, à l'exclusion des parties dans lesquelles les premières rainures d'amortissement (53) sont formées, est couplée à la première portion de support (3),
dans lequel les premières saillies d'amortissement (52) sont disposées de manière à être espacées les unes des autres dans une première direction axiale, et
dans lequel les premières rainures d'amortissement (53) sont disposées de manière à être espacées les unes des autres dans une seconde direction axiale, la seconde direction axiale et la première direction axiale étant perpendiculaires l'une à l'autre dans un plan.

2. Appareil (1) selon la revendication 1, dans lequel la première portion de support (3) comporte :
une première gorge de support (31) dans laquelle le mandrin (100) est inséré ; et
une première surface de support (32) configurée pour supporter un côté du mandrin (100) inséré dans la première gorge de support (31).

3. Appareil (1) selon la revendication 2, dans lequel la première surface de support (32) est formée pour être une surface courbe.

4. Appareil (1) selon la revendication 1, dans lequel la première portion de support (3) comporte un premier élément d'insertion (3a) à insérer dans le corps de réception (2) et une première rainure de réduction (3b) formée dans le premier élément d'insertion (3a), et
dans lequel le corps de réception (2) comporte une première rainure d'insertion (22) pour permettre d'insérer dans celle-ci une partie du premier élément d'insertion (3a) à l'exclusion de la première rainure de réduction (3b).

5. Appareil (1) selon la revendication 1, dans lequel les premières saillies d'amortissement (52) viennent en contact avec différentes parties du premier côté du mandrin (100).

6. Appareil (1) selon la revendication 2, dans lequel la première portion d'amortissement (5) est couplée à la première portion de support (3) pour couvrir une surface complète de la première surface de support (32).

7. Appareil (1) selon la revendication 2, dans lequel la première portion d'amortissement (5) est couplée à la première portion de support (3) pour recouvrir une partie de la première surface de support (32).

8. Appareil (1) selon la revendication 2, dans lequel les portions d'une pluralité de premières portions d'amortissement (5) sont couplées à la première portion de support (3), et
dans lequel les premières portions d'amortissement (5) sont couplées à la première surface de support (32) à des positions espacées les unes des autres.

9. Appareil (1) selon la revendication 1, comportant un premier amortisseur auxiliaire (20) couplé à la première portion de support (3),
dans lequel les premières saillies d'amortissement (52) sont disposées de manière à être espacées les unes des autres pour venir en contact partiel avec le premier côté du mandrin (100), et
dans lequel le premier amortisseur auxiliaire (20) est formé de manière à permettre à une surface complète de celui-ci de venir en contact avec un côté du mandrin (100).

10. Appareil (1) selon la revendication 1, comportant un premier amortisseur de support (30) couplé à la première portion de support (3) pour être disposé entre la première portion de support (3) et le corps de réception (2),
dans lequel le premier amortisseur de support (30) est formé d'un matériau élastiquement déformable.

11. Appareil (1) selon la revendication 1, comportant une première portion de paroi latérale (8) couplée de manière détachable à un côté du corps de réception (2) et un premier amortisseur de paroi latérale (80) couplé à la première portion de paroi latérale (8) pour être disposé entre la première portion de paroi latérale (8) et le premier côté du mandrin (100),
dans lequel le premier amortisseur de paroi latérale (80) comporte un premier corps de paroi latérale (80a) couplé à la première portion de paroi latérale (8) et une pluralité de premières saillies de paroi latérale (80b) faisant saillie à partir du premier corps de paroi latérale (80a), et
dans lequel les premières saillies de paroi latérale (80b) sont disposées de manière à être espacées les unes des autres pour venir en contact avec différentes parties du premier côté du mandrin (100).
